Europäisches Patentamt

(19) European Patent Office

Office européen des brevets

(11) Veröffentlichungsnummer: **0 008 999**
**A1**

(12) **EUROPÄISCHE PATENTANMELDUNG**

(21) Anmeldenummer: 79810050.9

(22) Anmeldetag: 19.06.79

(51) Int. Cl.³: **A 47 J 27/09**

(30) Priorität: 31.08.78 CH 9177/78

(43) Veröffentlichungstag der Anmeldung.
19.03.80 Patentblatt 80 6

(84) Benannte Vertragsstaaten:
AT BE CH DE FR GB IT NL SE

(71) Anmelder: Heinrich Kuhn Metallwarenfabrik
Aktiengesellschaft

CH-8486 Rikon(CH)

(72) Erfinder: Kuhn, Jacques
Mühleweg 7
CH-8486 Rikon(CH)

(74) Vertreter: Schmid, Rudolf et al,
c/o ISLER & SCHMID Patentanwaltsbureau
Walchestrasse 23
CH-8006 Zürich(CH)

(54) Ventil für Dampfkochtopf.

(57) Das Ventil für einen Dampfkochtopf besteht aus einem im Deckel (2) des Topfes eingeschraubten Ventilgehäuse (1), das eine vertikale Längsbohrung (5) zur Aufnahme eines Kolbens aufweist. Bei Anstieg des Dampfdruckes im Innern des Topfes wird der Kolben (6) nach oben verschoben, um sukzessive den topfinnendruck optisch anzuzeigen und mindestens zwei übereinander angeordnete Querausparungen (20, 21) zur Druckentlastung im Ventilgehäuse freizugeben. Die optische Anzeige besteht darin, dass am oberen Teil der Kolbenstange (7) angeordnete Signalringe (17, 18) sichtbar werden.

Das Ventil weist eine das Topfinnere mit der Aussenluft verbindende Ausnehmung (16) auf, die in einer untersten Lage des Kolbens (6) durch diesen freigegeben ist. Der Kolben (6) wird im drucklosen Zustand selbsttätig durch Schwerkraft in der untersten Lage gehalten. Bei Ueberdruck wird der Kolben (6) durch manuelles Niederpressen eines aus dem Gehäuse (1) vorstehenden Teils der Kolbenstange (7) in die unterste Lage gebracht. Bei beginnender Dampfentwicklung wird der Kolben (6) eine Wegstrecke (w) entgegen der Schwerkraft angehoben, bis er dicht in der Längsbohrung (5) sitzt, die Ausnehmung (16) verschliesst und eine bisher ungespannte Feder (15) zu spannen beginnt.

Das aus wenigen Einzelteilen einfach aufgebaute und leicht zerlegbare Ventil vereinigt folgende Funktionen in sich: Entlüftung im Ruhezustand, optische und akustische Anzeigen des Dampfdruckes, Sicherheitsdruckablass bei zu hohem Druck, Dampfablass vor dem Oeffnen des Topfes.

Fig. 1

EP 0 008 999 A1

0008999

Heinrich Kuhn
Metallwarenfabrik Aktiengesellschaft

CH-8486   R i k o n
Schweiz

B E S C H R E I B U N G

---

Ventil für Dampfkochtopf

---

Ziel der Erfindung ist es, ein Ventil für einen Dampfkochtopf zu schaffen, welcher folgende Funktionen in sich vereinigt:

- Im drucklosen Zustand des Kochtopfes soll das Ventil eine Verbindung des Gefässinnenraumes mit der Aussenluft freigeben, so dass der Gefässinnendruck gleich ist wie der Aussendruck der Atmosphäre.

- Beim Ankochen soll zuerst die Luft mit dem Luftsauerstoff entweichen können, bevor das Ventil schliesst.
Der Luftsauerstoff führt bei Gemüsen zu Verfärbungen des
Kochgutes und hat einen negativen Einfluss auf das Aroma
und das appetitliche Aussehen der Speisen. Sobald die Luft
durch die sich aufbauende Dampfatmosphäre ausgetrieben ist,
soll das Ventil automatisch schliessen, so dass der Kochvorgang eingeleitet werden kann.

- Das Ventil soll eine optische und akustische Signaleinrichtung beinhalten, um verschiedene Druckstufen anzuzeigen und insbesondere einen zu hohen Innendruck
akustisch zu signalisieren.

- Gleichzeitig soll das Ventil als Sicherheitsventil funktionieren und bei Erreichen eines vorbestimmten
Ueberdruckes automatisch ansprechen, um für Druckentlastung
im Kochgefäss zu sorgen.

- Schliesslich soll es möglich sein, nach dem
Kochvorgang das Ventil gefahrlos zu betätigen, um den Dampfdruck vor dem Oeffnen des Gefässes vollständig abzulassen.

Es sind Ventile für Dampfdrucktöpfe bekannt,
die einige dieser Funktionen erfüllen. So zeigt die CH-PS
296.973 ein Sicherheitsventil mit optischer Anzeigevorrichtung. Bei zunehmendem Innendruck im Kochgefäss wird der obere Teil einer mit Signalringen versehenen Kolbenstange aus dem Ventilkörper gepresst, um eine entsprechende Druckstufe anzuzeigen. Sobald ein bestimmter Ueberdruck erreicht wird, stellt das Ventil automatisch die Verbindung zwischen dem Topfinnern und der Aussenluft her, um einen Teil des Dampfes abzulassen.

Aus der DE-PS 1.247.581 ist ein Sicherheits- und Entlüftungsventil bekannt, bestehend aus einem in den Kochtopf eingelassenen Gehäuse aus elastischem Material, in welchem ein Ventilkörper gelagert ist. Beim Ankochen wird der Ventilkörper angehoben und dicht gegen eine elastische Ringfläche des Gehäuses gedrückt. Bei Ueberschreitung des zulässigen Höchstdruckes wird der nach unten verbreiterte Teil des Ventilkörpers durch den elastisch ausweichenden Rand der Ringfläche durchgedrückt, um die Verbindung des Topfinnenraumes mit der Aussenluft freizugeben.

Keines der bekannten Ventile vereinigt sämtliche eingangs erwähnten Funktionen in einer einzigen Einheit, und es ist nun Aufgabe der Erfindung, ein einfaches, aus nur wenigen Teilen bestehendes Ventil zu schaffen, das sämtlichen erwähnten Anforderungen genügt. Das Ventil soll auch problemlos zu bedienen und praktisch wartungsfrei sein.

Diese Aufgabe ist durch die im Patentanspruch 1 definierte Erfindung gelöst.

Anhand der Zeichnungen wird nachfolgend ein Ausführungsbeispiel der Erfindung näher erläutert. Die sieben Figuren zeigen das Ventil in verschiedenen Betriebsstellungen vor, während und nach dem Kochprozess.

Das Ventil weist ein Leichtmetallgehäuse 1 auf, welches in einer Einbuchtung 10 im Deckel 2 eines nicht näher dargestellten Dampfkochtopfes senkrecht eingesetzt ist und mittels der Mutter 3 befestigt ist. Der O-Ring 4 sorgt dabei für die einwandfreie Dichtung des Gehäuses 1 im Deckel 2. Im Gehäuse 1 ist eine zylindrische Längsbohrung 5 vorgesehen, in welcher ein unten an einer Kolbenstange 7 angeordneter Kolben 6 längsverschiebbar gelagert ist. Der obere Teil der Kolbenstange 7 tritt aus dem Gehäuse 1 heraus und trägt ein Gewinde 8, auf welchem ein Betätigungsknopf 9 aus isolierendem Material aufgeschraubt ist. Auf der Kolbenstange 7 sitzt eine Feder 15, die im Ruhezustand des Ventils nicht belastet ist. Kolben 6 und Kolbenstange 7 sind zweckmässig einstückig aus Leichtmetall hergestellt.

Zwischen dem Betätigungsknopf 9 und dem Gehäuse 1 ist eine Schutzglocke 11 aus rostfreiem Stahl locker gehalten. Die Schutzglocke 11 umhüllt das Gehäuse 1, wobei ihr unterer Rand nicht auf dem Deckel 2 aufliegt, so dass ein Ringspalt 12 für das Entweichen des Dampfes frei bleibt.

Der in den Topfinnenraum ragende Teil des Gehäuses 1 ist mit einem Kranz von Querbohrungen 14 versehen, die in einen erweiterten Abschnitt 13 der Gehäuselängsbohrung 5 münden.

Nachstehend werden die einzelnen Betriebszustände des Ventils anhand der Zeichnungen erläutert, wobei auch auf weitere konstruktive Merkmale eingegangen wird.

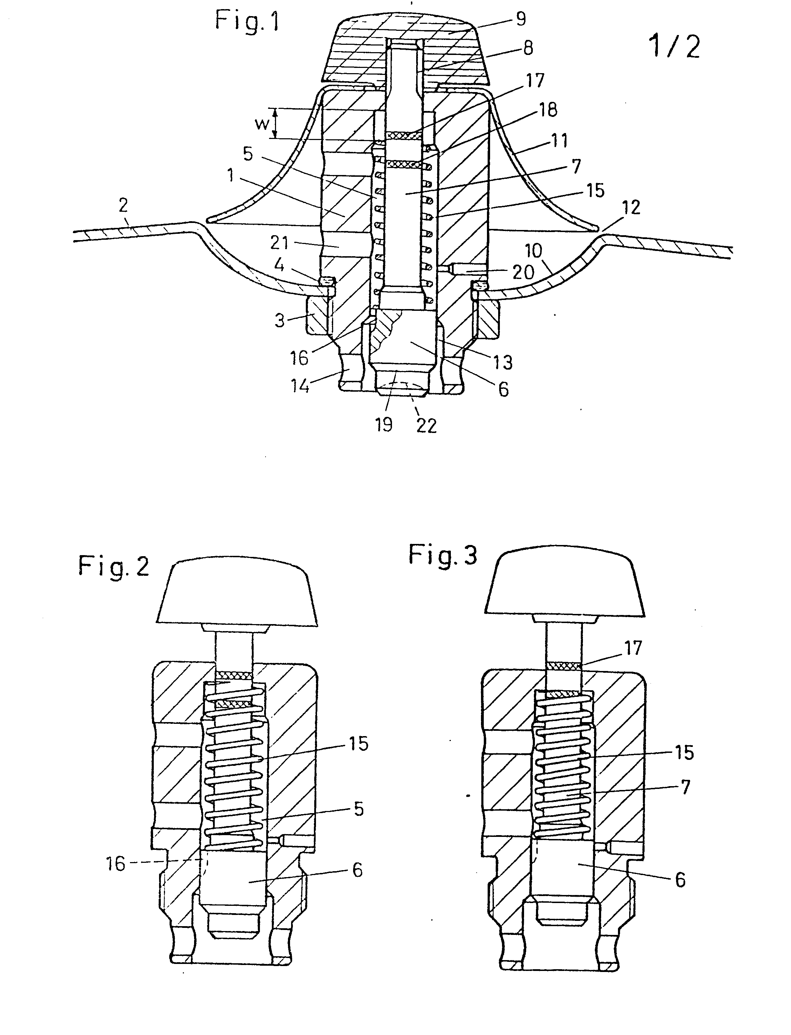

Fig. 1    Das Ventil ist in Ruhestellung, und der Innendruck des Gefässes entspricht dem Aussendruck der Atmosphäre. Die Druckanzeigeeinheit, bestehend aus dem Kolben 6 und der Kolbenstange 7, ruht in ihrer tiefsten Lage und wird in dieser Position durch ihr Eigengewicht gehalten. Der Kolben 6 ragt teilweise in den erweiterten Bohrungsabschnitt 13. Die Höhenlage der Druckanzeigeeinheit ist durch den aufgeschraubten Ventilknopf 9 bestimmt, der auf dem oberen Teil des Gehäuses 1 aufsitzt. Eine seitlich im oberen Teil des Kolbens 6 vorgesehene Ausnehmung 16 gibt die Verbindung zwischen Gehäuseinnenraum und der Aussenluft frei. Wird nun dem Dampfkochtopf Wärme zugeführt, so kann durch diese Ausnehmung 16 die im Topf vorhandene Luft mit dem Luftsauerstoff entweichen. Dadurch ist die Füllung des gesamten Raumes über dem Kochgut mit Dampf gewährleistet, so dass keine Verfärbungen und Aromabeeinträchtigungen der Speisen auftreten.

Fig. 2   Anfangsstufe des Kochvorganges, Ventil geschlossen: Bei steigender Temperatur im Kochtopf kommt das Kochgut zum Sieden, und der Kolben 6 wird durch den immer schneller entweichenden Dampf um eine Wegstrecke w hochgerissen, bis er an der noch entspannten Druckfeder 15 anschlägt und diese zu komprimieren beginnt. In dieser Ventilstellung sitzt der Kolben 6 dicht in der Längsbohrung 5, und die seitliche Ausnehmung 16 ist geschlossen, so dass der Dampfkochtopf nun auf Druck gehen kann. An dieser Stelle sei noch bemerkt, dass statt einer seitlichen Ausnehmung 16 im Kolben eine entsprechende Aussparung im unteren Teil der Längsbohrung 5 den gleichen Zweck erfüllen würde.

Fig. 3   Durch den steigenden Kochdruck wird die Feder 15 zunehmend gespannt, und Kolben 6 und Kolbenstange 7 schieben sich mehr und mehr nach oben. Wird der halbe Kochdruck erreicht, wird gleichzeitig ein erster roter Warnring 17 sichtbar, der im oberen Bereich der Kolbenstange 7 angebracht ist. Dieser erste Warnring gibt der Bedienungsperson Auskunft über den herrschenden Kochdruck und gleichzeitig einen Hinweis, dass die zugeführte Wärmeenergie gedrosselt werden kann.

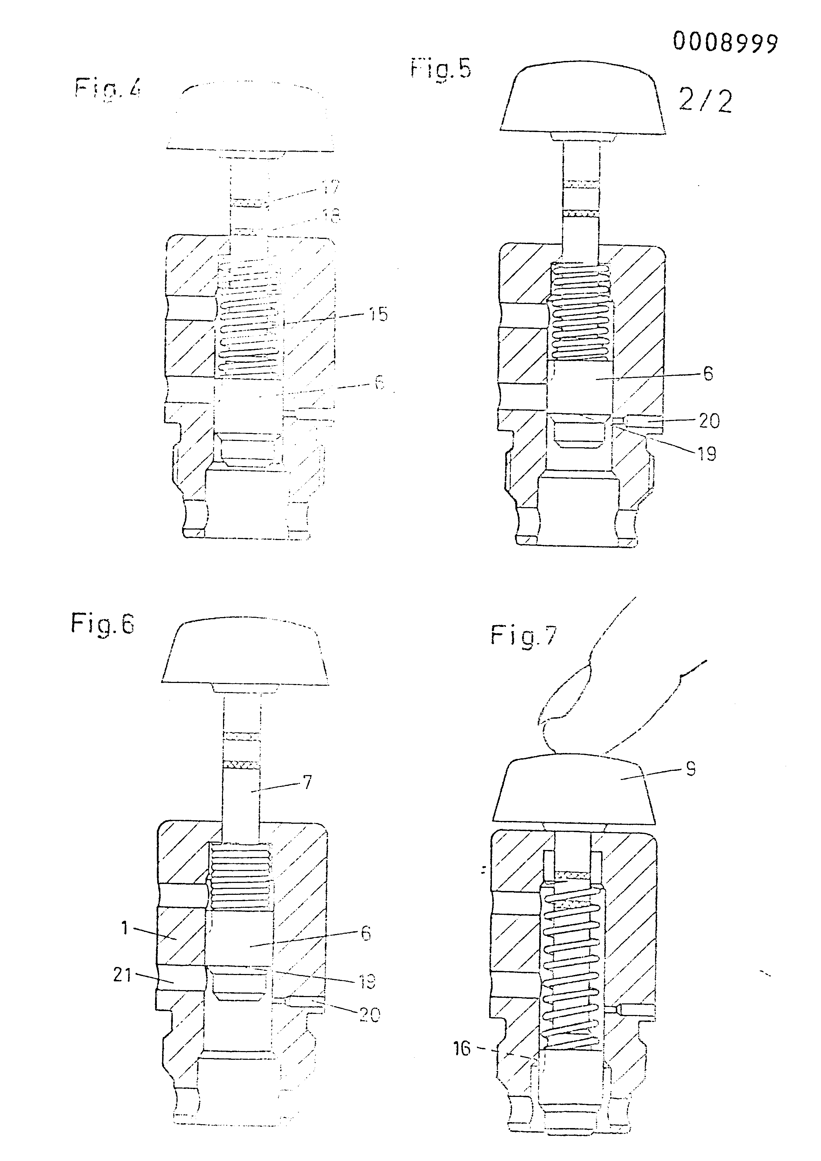

Fig. 4    Der weiter zunehmende Kochdruck hebt den Kolben 6 entgegen der Feder 15 sukzessive nach oben, und es wird der zweite rote Warnring 18 sichtbar, d. h. der für das Dampfkochen übliche Kochdruck hat sich aufgebaut. Dieser Druck ist auch massgebend für die in den Kochzeittabellen angegebenen Kochzeiten. Sofern dies von der Bedienungsperson nicht schon beim ersten roten Warnring gemacht wurde, sollte mindestens beim Sichtbarwerden des zweiten roten Warnringes die zugeführte Energie gedrosselt werden.

Fig. 5    Sofern die Energie nicht rechtzeitig gedrosselt wurde, schiebt sich der Kolben nun soweit nach oben, dass sein unterer Rand 19 eine kleine seitliche Querbohrung 20 frei gibt, wodurch etwas Dampf entweichen kann. Da der Bohrungsquerschnitt klein ist, entsteht ein in der Küche deutlich hörbares Zischgeräusch, das der Bedienungsperson zusätzlich akustisch anzeigt, dass die beiden optischen Warnsignale nicht rechtzeitig beachtet wurden, und dass im Kochgefäss ein über dem normalen Kochdruck stehender, leichter Ueberdruck herrscht. Die Bedienungsperson wird also dreimal (zweimal optisch und einmal akustisch) auf den steigenden Druck im Kochtopf aufmerksam gemacht.

Fig. 6 Wird die Wärmezufuhr trotz der drei Warnsignale nicht gestoppt, so steigt der Druck im Topf weiter an, und der Kolben 6 und die Kolbenstange 7 werden nochmals höher geschoben, bis der untere Kolbenrand 19 einen Kranz grösserer Bohrungen 21 im Ventilgehäuse 1 frei gibt. Der Gesamtquerschnitt dieser Bohrungen 21 ist so gross dimensioniert, dass der Druck im Topf auch bei noch so grosser Wärmezufuhr keinesfalls weiter ansteigen kann. Gleichzeitig wird das akustische Signal, das die kleine Warnsignalbohrung 20 bereits erzeugt hat, deutlich verstärkt. Die das Ventilgehäuse umgebende Schutzglocke 11 verteilt den ausströmenden Dampf durch den Ringspalt 12 rund über die ganze Deckeloberfläche, so dass das Bedienungspersonal keine Verbrennungen erleiden kann. Durch den Ringspalt 12 wird eine weite und feine Verteilung des ausströmenden Dampfes bewirkt, so dass dessen Temperatur in der umgebenden Luft rasch absinkt und keine Gefahr mehr beinhaltet. Der Dampf wird in horizontaler Richtung abgeblasen und kann nicht in Richtung Kopf oder Gesicht der bedienenden Person ausströmen.

Fig. 7 Diese Figur zeigt das Ventil in manuell betätigter Abdampfstellung. Ist die Kochzeit abgelaufen, und steht der Dampfkochtopf noch unter Kochdruck, so dass er nicht geöffnet werden kann, so bestehen folgende drei Möglichkeiten, den Druck im Topfinnern dem Aussendruck anzugleichen:

a) Man entfernt den Topf von der Wärmequelle und wartet, bis die Temperatur des Kochgutes unter den Siedepunkt des Wassers abgesunken ist. Wird diese Temperatur erreicht, so ist der Innendruck vollständig abgebaut und der Topf kann geöffnet werden.

b) Man stellt den unter Druck stehenden Topf unter eine Wasserquelle, wodurch der Dampf im Innern des Topfes rasch kondensiert und der Druck ebenfalls schnell absinkt.

Am einfachsten lässt sich der Druckausgleich durch Niederdrücken des Betätigungsknopfes 9 erzielen.
Der Knopf wird mit dem Finger nach unten gedrückt, bis er
am Ventilkörper aufsitzt. Dadurch verschiebt sich der Kolben wieder in seine unterste Lage (entsprechend der Ruhelage gemäss Fig. 1), so dass die seitliche Ausnehmung 16
freigelegt wird und der Dampf entweichen kann. Auch hier
spielt die Schutzglocke 11 eine wichtige Rolle, da der
anfänglich unter Kochdruck stehende Dampf über den Ringspalt
12 diffus verteilt und rasch abgekühlt wird. Da der Betätigungsknopf aus einem gut isolierenden Kunststoffmaterial
hergestellt ist, kann dessen Betätigung auch nach längeren
Kochzeiten ohne Hilfsmittel, wie z. B. Topflappen, usw.,
erfolgen.

Das vorbeschriebene Ventil ist weitgehend
selbstreinigend und problemlos im Betrieb. Die hohen Dampfströmgeschwindigkeiten bringen automatisch den gewünschten
Reinigungseffekt. Ist nach längerer Betriebszeit eine
gründliche Reinigung trotzdem angezeigt, so kann der Betätigungsknopf abgeschraubt werden. Zum Halten der Kolbenstange
beim Abschrauben kann ein Geldstück oder ein Schraubenzieher
in den unten am Kolben 6 ausgesparten Schlitz 22 eingeführt
werden. Das lediglich aus fünf wichtigen Teilen (Gehäuse 1, Kolben und Kolbenstange 6 und 7, Feder 15, Betätigungsknopf
9 und Schutzglocke 11) bestehende Ventil lässt sich rasch
und problemlos zerlegen und reinigen und sodann wieder
zusammensetzen. Zu den fünf Hauptbestandteilen kommen noch
die beiden Kleinteile Mutter 3 und Dichtung 4.

Andere bekannte Dampfkochtopfventile setzen
sich meistens aus mindestens sieben Hauptbestandteilen
zusammen, zu denen noch Kleinteile wie Schrauben und Dichtungen kommen. Da die bekannten Ventile nicht allen eingangs
geforderten Funktionen gerecht werden, müssen zusätzliche
Einrichtungen (z. B. für die Entlüftung oder für den Dampfablass) am Kochtopf vorgesehen sein.

Das erfindungsgemässe Ventil ist sehr einfach
aufgebaut und operiert weitgehend automatisch, so dass die
Bedienung und die Handhabung erleichtert werden.

In bezug auf das Freigeben der kleinen seitlichen Bohrung 20
sei erwähnt, dass neben der akustischen Signalisation diese Bohrung 20
auch der Vorentlastung des Dampfkochtopfes dient. Die Bohrung 20 hat
einen sehr kleinen Querschnitt, z. B. etwa 1 $mm^2$, so dass nur Dampf und
kein aufschäumendes Kochgut entweichen kann. Die spätere Freigabe der
grösseren Bohrungen 21, deren Gesamtquerschnitt etwa vierzigmal grösser
sein kann als derjenige der kleinen Bohrung 20, erfolgt dann ohne plötzliche Druckentlastung und ohne dass das Kochgut überspritzt.

Heinrich Kuhn
Metallwarenfabrik Aktiengesellschaft

CH-8486   R i k o n
Schweiz

P A T E N T A N S P R U E C H E

1.  Dampfkochtopfventil, bestehend aus einem im Deckel des Topfes eingesetzen Ventilgehäuse mit vertikaler Längsbohrung zur Aufnahme eines unten an einer Kolbenstange angebrachten Kolbens, der bei Anstieg des Dampfdruckes nach oben verschiebbar ist, um mittels des oberen, aus dem Gehäuse vortretenden Teils der Kolbenstange den Topfinnendruck optisch anzuzeigen und um sukzessive mindestens zwei übereinander angeordnete

Querausparungen zur Druckentlastung im Ventilgehäuse freizugeben, dadurch gekennzeichnet, dass das Ventil eine das Topfinnere mit der Aussenluft verbindende Ausnehmung (16) aufweist, die in einer untersten Lage des Kolbens (6) durch diesen freigegeben ist, dass der Kolben (6) im drucklosen Zustand selbsttätig durch Schwerkraft, hingegen bei Ueberdruck durch manuelles Niederpressen der Kolbenstange (7) in die unterste Lage bringbar ist, und dass
bei beginnender Dampfentwicklung der Kolben (6) eine
Wegstrecke (w) entgegen der Schwerkraft in eine höhere
Lage anhebbar ist, in welcher er dicht in
der Längsbohrung (5) sitzt, die Ausnehmung (16) verschliesst und eine bisher ungespannte Feder (15) zu
spannen beginnt.

2. Ventil nach Anspruch 1, dadurch gekennzeichnet, dass
die untere, zur Erzeugung eines ersten akustischen
Signales bestimmte Queraussparung (20) im Querschnitt
wesentlich kleiner ist als die obere, zur Erzeugung
eines verstärkten akustischen Signals und als Sicherheitsdampfablass bestimmte Queraussparung (21).

3. Ventil nach Anspruch 1, dadurch gekennzeichnet, dass
am oberen Ende der Kolbenstange (7) ein isolierter Betätigungsknopf (9) befestigt ist, der beim Aufsitzen
auf dem Gehäuse (1) die unterste Lage des Kolbens (6)
bestimmt.

4. Ventil nach Anspruch 3, dadurch gekennzeichnet, dass
zwischen dem Betätigungsknopf (9) und dem Gehäuse

0008999

eine Schutzglocke (11) angeordnet ist, welche das Gehäuse (1) umgibt, wobei zwischen dem unteren Rand der Glocke (11) und dem Topfdeckel (2) ein Ringspalt für das Entweichen des Dampfes (12) freigelassen ist.

5.   Ventil nach Anspruch 1, dadurch gekennzeichnet, dass die Ausnehmung (16) seitlich im oberen Teil des Kolbens (6) angeordnet ist.

6.   Ventil nach Anspruch 1, dadurch gekennzeichnet, dass der Kolben (6) zusammen mit der Kolbenstange (7) eine einstückige Einheit bildet, und dass auch das Gehäuse (1) einstückig ist.

7.   Ventil nach Anspruch 1, dadurch gekennzeichnet, dass das Ventil aus fünf einstückigen Hauptbestandteilen (1, 5 + 6, 9 , 11, 15) besteht.

0008999

1/2

Fig.1

Fig.2

Fig.3

Fig.4

17
18
15
6

Fig.5

6
20
19

Fig.6

7
1
6
21
19
20

Fig.7

9
16

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - U - 1 942 255</u> (ALCAN)<br>  * Anspruch 1; Figur 1 *<br><br>-- | 1,3,4,5,6 |
| | <u>GB - A - 490 713</u> (M.C.L.)<br>  * Insgesamt *<br><br>-- | 1,3,6 |
| | <u>BE - A - 806 483</u> (TOMADO B.V.)<br>  * Seite 5, Zeilen 33-35; Seite 6, Zeilen 1-26; Figuren 1-3 *<br><br>-- | 1,3,6,7 |
| | <u>CH - A - 450 661</u> (JORDAN)<br>  * Figur 2, Spalte 3 *<br><br>---- | 2 |

**KLASSIFIKATION DER ANMELDUNG (Int.Cl. 3)**

A 47 J 27/09

**RECHERCHIERTE SACHGEBIETE (Int. Cl. 3)**

A 47 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 03-12-1979 | SCHARTZ |

EPA form 1503.1 06.78